# DEMANDE DE BREVET EUROPEEN

(11) **EP 1 278 262 A1**
(43) Date de publication de la demande: **22.01.2003**
(21) Numéro de dépôt: 02291711.6
(22) Date de dépôt: 08.07.2002
(51) Int. Cl.: H01M 10/48, G01K 1/14

(54) **Ensemble de mesure de la température d'une batterie d'accumulateur**

(30) Priorité: 10.07.2001 FR 0109158
(71) Demandeur: Valeo Electronique et Systemes de Liaison, 78180 Montigny le Bretonneux (FR)
(72) Inventeur: Jure, Patrick, 92500 Rueil-Malmaison (FR)
(74) Mandataire: Faber, Jean-Paul

(57) **Abrégé**

Ensemble de mesure de la température d'une batterie d'accumulateurs comprenant un support (3) destiné à porter contre la batterie, caractérisé en ce que le support (3) présente un conduit (4) destiné à recevoir une sonde (5), celle-ci comprenant un corps en matière isolante dans laquelle s'étendent des conducteurs (14) reliés à une thermistance (13) située en regard d'une ouverture (10) dudit corps et contre laquelle est appliquée une lame élastique (22) présentant une onde destinée à coopérer avec une rampe du conduit (4 et 28) et disposée de manière qu'en fin de course d'insertion de la sonde dans ledit conduit (4), la thermistance (13) porte contre la batterie, des moyens (25, 26, 27) étant prévus pour verrouiller, en fin de course d'insertion, la sonde dans le conduit (4).

## Description

La présente invention concerne un ensemble de mesure de la température d'une batterie d'accumulateurs.

L'ensemble, selon l'invention, comprend un support destiné à porter contre la batterie, et est caractérisé en ce que le support présente un conduit destiné à recevoir une sonde, celle-ci comprenant un corps en matière isolante dans laquelle s'étendent des conducteurs reliés à une thermistance située en regard d'une ouverture dudit corps et contre laquelle est appliquée une lame élastique présentant une onde destinée à coopérer avec une rampe du conduit et disposée de manière qu'en fin de course d'insertion de la sonde dans ledit conduit, la thermistance porte contre la batterie, des moyens étant prévus pour verrouiller, en fin de course d'insertion, la sonde dans le conduit.

Suivant une caractéristique constructive, la sonde comprend un corps allongé avec deux parois latérales et un fond, celui-ci présentant un berceau pour la thermistance et des rainures pour les conducteurs, et un couvercle destiné à être inséré entre les parois latérales et dont une extrémité est solidaire de la lame élastique destinée à coopérer avec la thermistance, des moyens de verrouillage étant prévus pour assurer la fixation du couvercle sur le corps.

Suivant une autre caractéristique constructive, les parois latérales du corps comportent des fentes dans lesquelles s'étendent des crochets destinés à coopérer avec des ergots du couvercle.

Suivant un détail constructif, le couvercle comporte une lumière dans laquelle s'étend une patte élastique pourvue d'une entaille destinée à recevoir, en fin de course d'insertion de la sonde dans le conduit, un épaulement dudit conduit.

Enfin, le couvercle comporte, sur sa face destinée à être tournée vers le fond du corps, des saillies pour bloquer les conducteurs dans les rainures.

L'invention va maintenant être décrite avec plus de détails en se référant à un mode de réalisation particulier donné à titre d'exemple seulement et représenté aux dessins annexés, dans lesquels :
Figure 1 montre en perspective schématique un support avec un élément de batterie.
Figure 2 est une vue en perspective d'une sonde, selon l'invention.

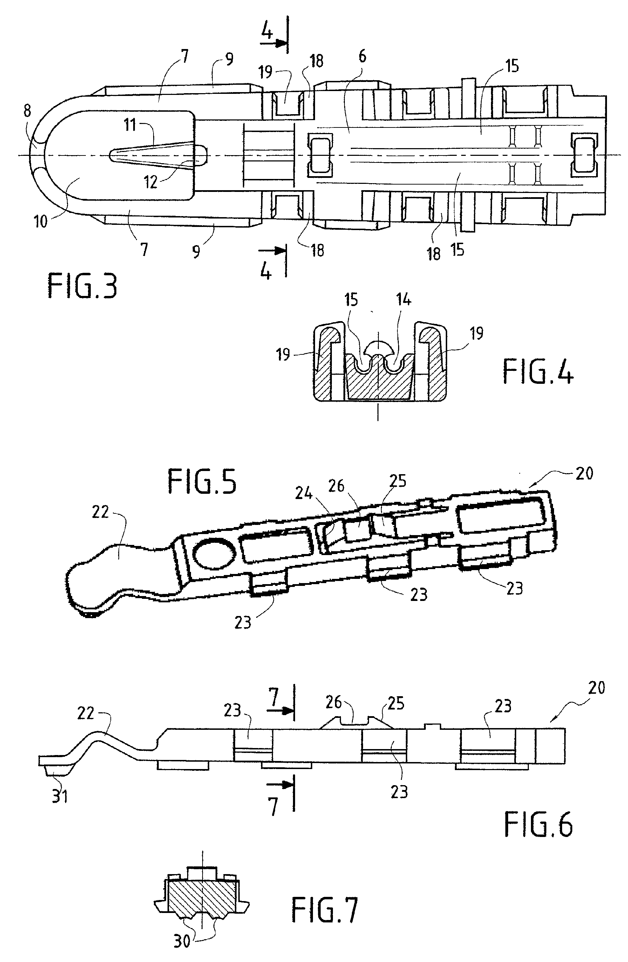

Figure 3 est une vue en plan du corps de la sonde.
Figure 4 est une vue en coupe suivant la ligne 4-4 de la figure 3.
Figure 5 est une vue en perspective du couvercle.
Figure 6 est une vue en élévation du couvercle.
Figure 7 est une vue en coupe suivant la ligne 7-7 de la figure 6.
Figure 8 est une vue en coupe suivant la ligne 8-8 de la figure 1.

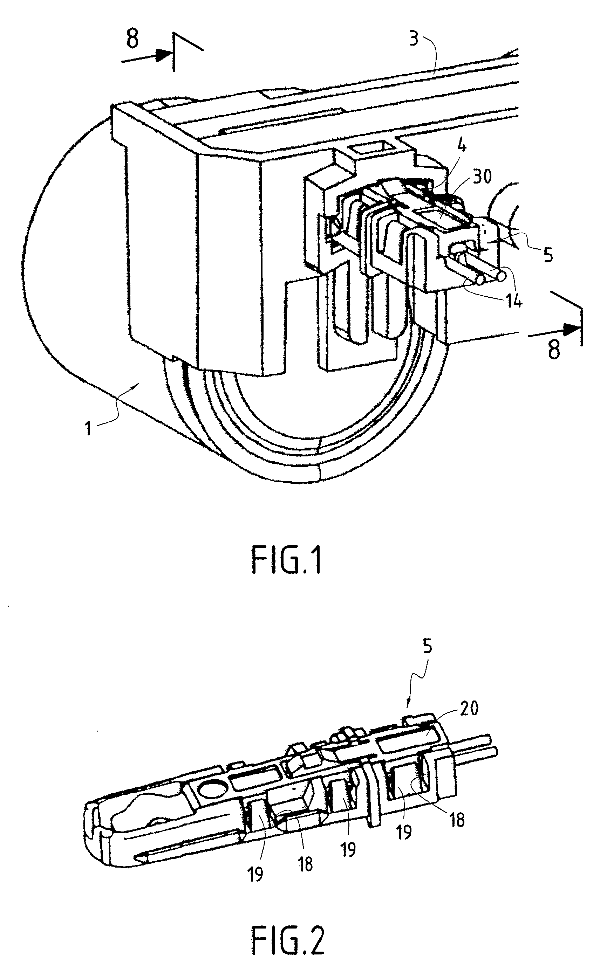

A la figure 1, on a représenté schématiquement une batterie d'accumulateurs 1, contre l'un des côtés étant appliqué un support 3.

Le support 3 comporte un conduit 4 dans lequel est insérée une sonde 5.

La sonde 5 est constituée d'un corps allongé isolant en matière plastique présentant un fond 6 et deux parois latérales 7 reliées à une extrémité par une partie arrondie 8.

Chaque paroi latérale comporte des saillies longitudinales 9 destinées à coopérer avec des rainures correspondantes du conduit 4.

Le fond 5 présente un berceau 12 destiné à recevoir une thermistance 13 reliée à des conducteurs 14 guidés dans des rainures 15 du fond 5 et s'ouvrant à l'extrémité du corps opposée à celle pourvue de la partie 8.

Le fond 5, au voisinage de la partie 8, est percé d'une ouverture 10 et dans laquelle s'étend une patte 11 pour ladite thermistance 13.

Dans les parois latérales 7 sont pratiquées des fentes 18 dans lesquels s'étendent des crochets élastiques 19.

Le corps reçoit un couvercle 20 de forme allongée et solidaire, à une extrémité 21, d'une lame élastique 22.

Latéralement, le couvercle 20 est pourvu d'ergots 23 destinés à s'insérer dans les fentes 18 et à coopérer avec les crochets 19 pour assurer le verrouillage dudit couvercle afin de caler les conducteurs et la thermistance, la face interne dudit couvercle présentant des saillies 30 pour presser les conducteurs 14 dans le fond des rainures 15.

La lame élastique 22 est pliée afin de former une onde dont la convexité est tournée du côté de la face du couvercle opposée à celle destinée à porter contre le fond 5, tandis que l'extrémité libre de ladite lame 22 présente des bossages 31 de guidage de la thermistance 13.

Dans une partie intermédiaire du couvercle 20 est pratiquée une lumière 24 dans laquelle s'étend une patte élastique 25 présentant, sur sa face tournée du côté de la face du couvercle opposée à celle destinée à porter contre le fond 5, une entaille 26.

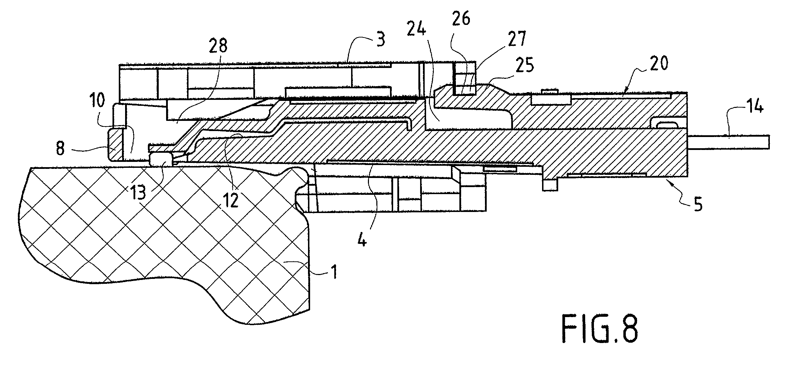

Comme on le voit à la figure 8, le conduit 4 présente, d'une part, à une extrémité, un épaulement 27 et, d'autre part, à l'autre extrémité, une rampe 28. Ainsi, lorsqu'on engage la sonde 5, la convexité de la lame élastique 22 porte contre la rampe 28 de sorte que la thermistance est appliquée contre la surface supérieure de la batterie 1, tandis que la patte élastique 25, par son entaille 26, vient coopérer avec l'épaulement 27 pour assurer le verrouillage de ladite sonde dans ledit conduit 4.

Bien entendu, l'invention n'est pas limitée au mode de réalisation qui vient d'être décrit et représenté. On pourra y apporter de nombreuses modifications de détail sans sortir pour cela du cadre de l'invention.

## Revendications

1. Ensemble de mesure de la température d'une batterie d'accumulateurs comprenant un support (3) destiné à porter contre la batterie, **caractérisé en ce que** le support (3) présente un conduit (4) destiné à recevoir une sonde (5), celle-ci comprenant un corps en matière isolante dans laquelle s'étendent des conducteurs (14) reliés à une thermistance (13) située en regard d'une ouverture (10) dudit corps et contre laquelle est appliquée une lame élastique (22) présentant une onde destinée à coopérer avec une rampe du conduit (4 et 28) et disposée de manière qu'en fin de course d'insertion de la sonde dans ledit conduit (4), la thermistance (13) porte contre la batterie, des moyens (25, 26, 27) étant prévus pour verrouiller, en fin de course d'insertion, la sonde dans le conduit (4).

2. Ensemble de mesure de la température d'une batterie d'accumulateurs, selon la revendication 1, **caractérisé en ce que** la sonde (5) comprend un corps allongé avec deux parois latérales (7) et un fond (6), celui-ci présentant un berceau pour la thermistance et des rainures pour les conducteurs, et un couvercle (20) destiné à être inséré entre les parois latérales (7) et dont une extrémité est solidaire de la lame élastique (22) destinée à coopérer avec la thermistance (13), des moyens de verrouillage étant prévus pour assurer la fixation du couvercle sur le corps.

3. Ensemble de mesure de la température d'une batterie d'accumulateurs, selon la revendication 2, **caractérisé en ce que** les parois latérales du corps comportent des fentes (18) dans lesquelles s'étendent des crochets (19) destinés à coopérer avec des ergots du couvercle (20).

4. Ensemble de mesure de la température d'une batterie d'accumulateurs, selon les revendications 1 et 2, **caractérisé en ce que** le couvercle comporte une lumière (24) dans laquelle s'étend une patte élastique (25) pourvue d'une entaille (26) destinée à recevoir, en fin de course d'insertion de la sonde (5) dans le conduit (4), un épaulement dudit conduit.

5. Ensemble de mesure de la température d'une batterie d'accumulateurs, selon les revendications 1 et 2, **caractérisé en ce que** le couvercle comporte, sur sa face destinée à être tournée vers le fond du corps, des saillies (30) pour bloquer les conducteurs (14) dans les rainures (15).
